Europäisches Patentamt

European Patent Office

Office européen des brevets

(19)

(11) Numéro de publication: **0 342 092**
**A1**

(12) **DEMANDE DE BREVET EUROPEEN**

(21) Numéro de dépôt: **89401217.8**

(22) Date de dépôt: **28.04.89**

(51) Int. Cl.⁴: $C\ 04\ B\ 41/53$

(30) Priorité: **10.05.88 FR 8806270**

(43) Date de publication de la demande:
**15.11.89 Bulletin 89/46**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Chassagneux, Evelyne**
**Rue des Grès**
**F-69390 Millery (FR)**

**Caix, Olivier**
**21ter, avenue du Point du Jour**
**F-69005 Lyon (FR)**

(74) Mandataire: **Seugnet, Jean Louis et al**
**RHONE-POULENC INTERSERVICES Service Brevets**
**Chimie 25, quai Paul Doumer**
**F-92408 Courbevoie Cédex (FR)**

(54) **Procédé de traitement de fibres céramiques.**

(57) L'invention a trait à un procédé de traitement de fibres céramiques à base de silicium, d'azote et/ou de carbore, caractérisé en ce qu'il consiste à mettre en contact lesdites fibres avec de l'acide fluorhydrique.

**EP 0 342 092 A1**

**Description**

## PROCEDE DE TRAITEMENT DE FIBRES CERAMIQUES

L'invention a trait à un procédé de traitement de fibres céramiques.

Plus précisément, l'invention vise à fournir des fibres céramiques à base de nitrure et/ou de carbure de silicium présentant des caractéristiques générales de surface améliorées.

On sait qu'il est possible de préparer des fibres céramiques en SiC, $Si_3N_4$ ou leurs mélanges, notamment à partir de polymères organométalliques précurseurs desdites compositions céramiques.

Ces polymères précurseurs, comme il sera développé ci-après, sont des produits bien connus se présentant sous forme de monomères, d'oligomères, de polymères cycliques ou linéaires, et également sous la forme de polymères résineux ; ils peuvent être préparés suivant une large variété de procédés à partir d'une gamme étendue de produits de départ.

Selon un schéma classique, ces polymères (après fusion éventuelle s'ils sont initialement à l'état solide) sont alors filés en fibres continues par tout moyen connu en soi, notamment par extrusion à travers des filières, puis pyrolysés (après une étape éventuelle de réticulation destinée à augmenter leur tenue thermique) pour donner finalement les fibres en céramique désirées.

On a constaté néanmoins que les fibres céramiques à base de SiC et/ou $Si_3N_4$ susceptibles d'être obtenues notamment par cette voie, peuvent présenter dans certains cas des qualités de surface insuffisantes qui se traduisent par une altération sensible des performances d'ensemble de la fibre. On entend ici par qualités de surface notamment la présence éventuelle d'une part de diverses impuretés chimiques, comme de la silice par exemple, et d'autre part de défauts critiques, et par performances d'ensemble certaines propriétés mécaniques comme par exemple la résistance à la rupture.

On a maintenant trouvé, et il s'agit là d'un des premiers objets de la présente invention, qu'il est possible d'améliorer de manière substantielle les propriétés de surface et/ou mécaniques des fibres céramiques à base de silicium, d'azote et/ou de carbone au moyen du nouveau procédé de traitement selon l'invention, ledit procédé étant caractérisé en ce qu'il consiste à mettre en contact lesdites fibres avec de l'acide fluorhydrique HF.

De manière totalement inattendue et surprenante, on a constaté que le procédé selon l'invention permet d'atteindre simultanément les résultats suivants:
- tout d'abord l'élimination des impuretés de surface, et notamment des couches d'oxydes superficielles, comme par exemple de silice,
- ensuite l'élimination substantielle des défauts de surface critiques présents initialement sur la fibre,
- et enfin l'amélioration sensible de la contrainte à la rupture de la fibre.

Mais d'autres caractéristiques et avantages de l'invention apparaîtront encore plus clairement à la lecture de la description qui va suivre et de l'exemple concret, mais non limitatif, relatif à sa mise en oeuvre.

D'une manière générale, la fibre céramique sur laquelle on opère le traitement selon l'invention peut donc être une fibre à base de carbure de silicium, de nitrure de silicium ou bien encore de carbonitrure de silicium. On a constaté néanmoins que le traitement selon l'invention s'applique plus particulièrement bien aux fibres céramiques de la troisième catégorie, c'est à dire celles à base de silicium, de carbone et d'azote.

Ces fibres peuvent être monofilamentaires ou plurifilamentaires, c'est à dire constituées par l'entrelacement de plusieurs monofilaments.

Les fibres à base de SiC et/ou $Si_3N_4$ traitées selon l'invention auront été de préférence obtenues par la voie précurseurs organométalliques définie ci-avant dans la description, mais il va de soi que le traitement de fibres obtenues par tout autre moyen connu en soi n'est bien entendu pas exclu.

De manière classique et connue, les précurseurs organométalliques convenant pour la réalisation de telles fibres sont, non limitativement, les polysilanes, les polycarbosilanes, les polycarbodisilanes, les polysilazanes et les poly(disilyl)silazanes.

Les polymères organométalliques rentrant dans les trois premières catégories sont plus spécialement adaptés à la préparation de fibres SiC.

Pour ce qui concerne leur synthèse et leur transformation sous forme de fibres, on pourra avantageusement se reporter aux documents de base que sont les demandes de brevets français n° 2.308.590, n° 2.308.650, n° 2.327.836 et n° 2.345.477, citées ici à titre de référence, ainsi qu'aux documents FR-A- 2.487.364, FR-A-2.487.366, EP-A- 51.855, EP-A- 123.162, EP-A 123.934, EP-A- 184.123 et US-A- 4.414.403 qui décrivent diverses variantes de réalisation du procédé général exposé dans les quatre demandes de base précitées.

Les polymères organométalliques du type polysilazane et poly(disilyl)silazane sont quant à eux plus particulièrement adaptés à la réalisation de fibres $Si_3N_4$ ou de fibres mixtes $Si_3 N_4$ - SiC.

Sur ce sujet, on pourra avantageusement se reporter, de façon non limitative, aux documents de base que sont les demandes de brevets français n° 2.190.764 et 2.197.829 citées ici à titre de référence. Des variantes de mise en oeuvre concernant tant la synthèse de tels polymères que leur transformation sous forme de fibres peuvent également être trouvées notamment dans les références suivantes : FR-A- 1.086.932, US-A- 2.564.674, US-A- 3.853.567, US-A- 3.892.583, BE-A- 888.787, GB-A- 881.178, FR-A- 1.379.243, FR-A- 1.392.853, FR-A- 1.393.728, EP-A- 75.828, FR-A- 2.497.812, JP-A- 77/160446, US-A- 3.007.886, US-A- 3.187.030 et FR-A- 2.577.933.

La fibre céramique désirée étant ainsi obtenue, elle est alors, selon l'invention, mise en contact avec de l'acide fluorhydrique HF.

L'acide fluorhydrique est de préférence utilisé sous la forme d'une solution liquide, mais l'utilisation d'acide fluorhydrique gazeux n'est bien entendu pas exclue.

D'autre part, cette solution liquide est de préférence aqueuse.

La taux de dilution de l'acide HF dans ladite solution est alors avantageusement compris entre 5 et 30 % en volume, et se situe de préférence aux environs de 10 % en volume.

La durée du traitement peut varier dans une large mesure, c'est à dire dans un intervalle de temps s'étalant entre quelques minutes et plusieurs heures et plus particulièrement entre 5 minutes et 5 heures ; néanmoins, les durées de traitement comprises entre 5 et 60 minutes sont généralement suffisantes pour arriver au résultat recherché.

Concernant enfin la température à laquelle est menée le traitement, elle peut être comprise entre l'ambiante et 100°C, mais se situe de préférence aux environs de 20-30°C, et encore plus préférentiellement vers 25°C.

D'une manière générale, le réglage des trois paramètres interdépendants que sont la concentration, le temps et la température est déterminé en tenant compte du fait qu'un traitement trop fort (HF trop concentré et/ou température trop élevée) ou trop long, peut endommager la fibre en modifiant ses propriétés à coeur (diminution de la densité, apparition d'une corrosion par piqûres, modifications de la morphologie ou autres).

Pratiquement, on arrête le traitement selon l'invention dès lors que l'apparition d'une surface parfaitement lisse et propre est observée.

Les fibres traitées selon l'invention peuvent trouver une application importante comme agents de renforcement de composites à matrice verre, métal ou céramique, compte tenu du fait que, d'une manière générale, il est bien connu que dans de tels matériaux les caractéristiques de l'interface fibres-matrice ont une grande importance.

Un exemple concret de réalisation de l'invention va maintenant être donné.

EXEMPLE

Une fibre monofilamentaire en carbonitrure de silicium est préparée comme suit :
- un polymère de type polysilazane est tout d'abord préparé en suivant rigoureusement le mode opératoire décrit à l'exemple 18 de la demande de brevet français FR-A- 2.577.933 au nom de la Demanderesse, c'est à dire en polymérisant en présence d'acide triflique un co-ammonolysat obtenu par ammonolyse en milieu solvant d'un mélange de méthyltrichlorosilane et de diméthyldichlorosilane dans un rapport molaire 67-33
- le polysilazane obtenu est alors fondu, filé sous forme de fibres par extrusion puis rendu infusible
- les fibres sont enfin pyrolysées sous atmosphère inerte (azote ou argon) à une température comprise entre 1000 et 1500°C.

Les caractéristiques de la fibre obtenue sont alors les suivantes :
$\emptyset = 12,6 \pm 0,8$ μm (diamètre)
$_R = 1000 \pm 300$ MPa (contrainte à la rupture)
$E = 130$ GPa (module d'Young)

Ra = 0,8 μm (taille moyenne du défaut critique)
m = 3,5 (module de Weibull)

Cette fibre possède en surface une couche de silice SiO$_2$ caractérisée en ESCA.

Remarques :
- Ra est mesuré par examen au microscope électronique à balayage des facies de rupture
- m est un paramètre significatif des dispersions de la contrainte à la rupture d'un matériau ; plus la dispersion est grande, plus m est petit.

Cette fibre est ensuite traitée à 25°C et pendant 30 minutes par une solution aqueuse d'acide fluorhydrique diluée à 10 % en volume.

A l'issue de ce traitement, les caractéristiques de la fibre sont alors les suivantes :
$\emptyset = 11,5 \pm 0,8$ μm
$_R = 1430 \pm 260$ MPa
$E = 130$ GPa
Ra = 0,6 μm
m = 5,7

On observe que la surface de la fibre est parfaitement lisse et ne possède plus de SiO$_2$ de surface (analyse ESCA).

D'autre part, l'observation au microscope électronique à balayage (MEB) montre l'existence de deux types de défauts avant le traitement HF de la fibre, mais d'un seul type après traitement.

Ces résultats mettent clairement en évidence qu'il est possible au moyen d'un traitement HF d'améliorer l'état de surface et la contrainte à la rupture d'une fibre céramique par diminution de la taille moyenne du défaut critique Ra.

**Revendications**

1/ Procédé de traitement d'une fibre céramique à base de silicium, d'azote et/ou de carbone, caractérisé en ce qu'il consiste à mettre en contact ladite fibre avec de l'acide fluorhydrique.

2/ Procédé selon la revendication 1 caractérisé en ce que l'acide fluorhydrique est sous la forme d'une solution liquide.

3/ Procédé selon la revendication 2 caractérisé en ce que ladite solution est aqueuse.

4/ Procédé selon l'une quelconque des revendications 2 et 3 caractérisé en ce que l'acide fluorhydrique est dilué dans ladite solution à raison de 3 à 30 % en volume.

5/ Procédé selon l'une quelconque des revendications 1 à 4 caractérisé en ce que la durée dudit traitement est comprise entre 5 minutes et 5 heures.

6/ Procédé selon l'une quelconque des revendications précédentes caractérisé en ce que la température dudit traitement est comprise entre 20 et 30°C.

7/ Procédé selon l'une quelconque des revendications précédentes caractérisé en ce que la fibre à traiter est une fibre à base de carbonitrure de silicium.

8/ Fibre céramique à base de silicium, d'azote et/ou de carbone susceptible d'être obtenue par la mise en oeuvre d'un procédé tel que défini à l'une quelconque des revendications 1 à 7.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 92, no. 16, avril 1980, page 329, résumé no. 134047d, Columbus, Ohio, US; & JP-A-79 145 725 (TOKYO SHIBAURA ELECTRIC CO., LTD.) 14-11-1979 * Résumé * | 1-3,5 | C 04 B 41/53 |
| A | US-A-3 871 931 (GODBER) * Colonne 1, lignes 15-21 * | 1 | |
| A | CHEMICAL ABSTRACTS, vol. 106, no. 20, mai 1987, page 332, résumé no. 161529b, Columbus, Ohio, US; & JP-A-62 36 086 (TOSHIBA CORP.) 17.02.1987 | 1 | |
| A | DE-A-3 345 353 (OSTWALD) * Revendication 1 * | 1 | |
| A | GB-A-1 420 155 (PHILIPS ELECTRONICS) * Revendication 1 * | 1 | |

**DOMAINES TECHNIQUES RECHERCHES (Int. Cl.4)**

C 04 B
C 09 K

Le présent rapport a été établi pour toutes les revendications

| Lieu de la recherche | Date d'achèvement de la recherche | Examinateur |
|---|---|---|
| LA HAYE | 20-07-1989 | THEODORIDOU E. |